# EUROPÄISCHE PATENTSCHRIFT

(11) **EP 3 230 606 B1**
(45) Veröffentlichungstag und Bekanntmachung des Hinweises auf die Patenterteilung: **31.03.2021**
(21) Anmeldenummer: 15820426.3
(22) Anmeldetag: 10.12.2015
(51) Int. Cl.: F16B 37/06

(54) **BLINDNIETELEMENT, DESSEN HERSTELLUNG UND VERWENDUNG**
BLIND RIVET ELEMENT, PRODUCTION AND USE THEREOF
ÉLÉMENT FORMANT RIVET BORGNE, FABRICATION ET UTILISATION DE CELUI-CI

(30) Priorität: 10.12.2014 DE 102014018159
(43) Veröffentlichungstag der Anmeldung: 18.10.2017
(73) Patentinhaber: Bossard AG, 6301 Zug (CH)
(72) Erfinder: BEER, Florian, 93133 Burglengenfeld (DE)
(74) Vertreter: Toleti, Martin
(86) Internationale Anmeldenummer: PCT/CH2015/000181
(87) Internationale Veröffentlichungsnummer: WO 2016/090503

(56) Entgegenhaltungen:
- BE-A2- 864 969
- DE-T2- 69 913 493
- FR-A- 982 415
- FR-A1- 2 302 441
- GB-A- 854 830
- US-A- 4 182 216
- US-A1- 2005 180 841
- US-A1- 2014 130 335

## Beschreibung

### Technisches Gebiet

Die vorliegende Erfindung betrifft ein gattungsgemäßes Blindnietelement gemäß dem Oberbegriff des Anspruchs 1, nämlich ein Blindnietelement mit einem Kopf, mit einem sich daran anschließenden hohlen Schaft, dessen Außenseite einen gegenüber dem Kopf geringeren Außendurchmesser aufweist, und mit einem im Schaft mit axialem Abstand vom Kopf vorgesehenen Innengewinde.

Die vorliegende Erfindung betrifft auch ein Herstellungsverfahren für ein derartiges Blindnietelement sowie dessen Verwendung.

### Stand der Technik

Derartige gattungsgemäße Blindnietelemente sind bekannt (vgl. zum Beispiel die Druckschrift US 3 136 203) und werden in einer nur von einer Seite zugänglichen Bohrung eines Gegenstands so eingesetzt, dass der Kopf am Randbereich des einen Endes der Bohrung zur Anlage kommt. Dann wird von derselben Seite in den hohlen Schaft ein Setzgerät oder Setzwerkzeug mit seinem Außengewinde in das an dieses angepasste Innengewinde eingeschraubt.

Wenn dann mittels des Setzgeräts oder Setzwerkzeugs der Schaft in Richtung Kopf gezogen und damit unter Andrücken des Kopfes an den Gegenstand gestaucht wird, bildet sich am Schaft eine radial nach außen gewölbte Wulst aus, und zwar außerhalb der Bohrung zwischen dem Kopf und dem Innengewinde. Dieser legt sich um den Randbereich des anderen Endes der Bohrung, wodurch das Blindnietelement in der Bohrung des Gegenstands festgelegt ist.

Hierbei weist diese Verbindung den Nachteil auf, dass sich die Wulst nicht genau an immer derselben Stelle außerhalb der Bohrung beim Setzen im mit dem Blindnietelement zu versehenden Gegenstand ausbildet. Weiterhin kann diese Verbindung durch ihre Lochleibung weder in spröden Materialien, wie etwa in Acrylglas (PMMA = Polymethylmethacrylat) oder in Karbon, noch in weichen Materialien, wie etwa in Kunststoffen, eingesetzt werden.

Zum technologischen Hintergrund der vorliegenden Erfindung sei noch auf die Druckschriften EP 1 532 371 B1, WO 2007/035480 A2 US 2005/180841 A1 und DE 91 14 473 U1 aufmerksam gemacht.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Stands der Technik liegt der vorliegenden Erfindung die Aufgabe zugrunde, ein gattungsgemäßes Blindnietelement gemäß dem Oberbegriff des Anspruchs 1 sowie ein gattungsgemäßes Verfahren gemäß dem Oberbegriff des Anspruchs 11 so weiterzubilden, dass es stets an derselben vorgebbaren Stelle beim Setzen eine kontrollierte Deformation, insbesondere in Form einer Wulst, ausbildet.

Diese Aufgabe wird bei einem gattungsgemäßen, das heißt gemäß dem Oberbegriff des Anspruchs 1 ausgebildeten Blindnietelement erfindungsgemäß durch dessen kennzeichnende Merkmale, also dadurch gelöst,
- dass der hohle Schaft im Bereich des Kopfes mit einer radial nach außen vorstehenden Einstellkontur versehen ist,
- dass der Schaft eine in radialer Richtung bereits geformte Wölbung aufweist, wobei die geformte Wölbung eine Auswölbung ist, die in Umfangsrichtung oder sternsymmetrisch ausgebildet ist,
- dass diese Wölbung zwischen der Einstellkontur und dem Innengewinde angeordnet ist, und
- dass die Wölbung einen maximalen Aussendurchmesser aufweist, der nicht grösser als der Aussendurchmesser der Einstellkontur ist.

Die Einstellkontur ist vorzugsweise ein Zentrierelement. Die Einstellkontur kann als in Umfangsrichtung umlaufender Bund mit einem vorgebbaren Außendurchmesser ausgebildet sein. Die Wölbung ist eine Auswölbung, insbesondere eine nach Außen vorspringende Auswölbung oder Vorwulst. Außerdem verläuft die Wölbung in Umfangsrichtung.

Die, insbesondere nach Art eines Absatzes oder einer Stufe ausgestaltete, Einstellkontur ist bezüglich der Höhe und/oder der Geometrie prinzipiell frei einstellbar und kann kreisförmig, elliptisch, vierkantig oder sechskantig ausgebildet oder mit Zentrierzähnen versehen sein.

Diese Einstellkontur dient nach dem Einsetzen des Blindnietelements zum mittigen Halten des Kopfes in dem einen Ende der Bohrung, wohingegen die umlaufende Wölbung außerhalb der Bohrung zu liegen kommt.

Die Auswölbung oder Vorwulst ist bezüglich der Position, des Radius und der Geometrie prinzipiell frei einstellbar und kann von elliptischer oder halbrunder Form sein, insbesondere mit Stufe.

Diese Auswölbung oder Vorwulst bildet einen Bereich der Destabilisierung in der Wandung des Schaftes. Beim Setzen des derart erfindungsgemäß ausgestalteten Blindnietelements wird die sich ausbildende, insbesondere rundum geschlossene, also nicht geschlitzte Wulst im Bereich der Auswölbung oder Vorwulst gebildet und damit präzise immer an der genau vorbestimmten Stelle. Ein derartiges erfindungsgemäßes Blindnietelement ist ohne Vorbild im Stand der Technik.

So können durch die Auswölbung oder Vorwulst deutlich dickere Wandstärken genutzt werden, denn die Setzkraft ist durch die Auswölbung oder Vorwulst deutlich geringer als bei konventionellen Blindnietelementen. Auf diese Weise werden bei der vorliegenden Erfindung deutlich größere Klemmkräfte zwischen der Wulst und dem Kopf des Blindnietelements erzielt.

Auch der Außendurchmesser des Blindnietelements kann insoweit vergrößert werden, wodurch das Blindnietelement unter Belastung eine höhere Verdrehfestigkeit aufweist.

Die Einstellkontur und die Auswölbung oder Vorwulst beeinflussen sich gegenseitig und stehen somit in Wechselwirkung. Eine kleine Einstellkontur mit einer Höhe von zum Beispiel etwa zwei Millimetern in Kombination mit einer ganz nah der Einstellkontur beginnenden großen Auswölbung oder Vorwulst mit einem Radius von zum Beispiel etwa zwölf Millimetern kann bei einer Stärke des Gegenstands, zum Beispiel des Blechs, von etwa sechs Millimetern die Eigenschaft erzielen, dass das Blindnietelement eine sehr hohe Verdrehfestigkeit aufweist. Dies resultiert aus der entstehenden Lochleibung der Auswölbung oder Vorwulst.

Wird diese Ausführung hingegen in einen Gegenstand, zum Beispiel in ein Blech, von nur etwa 2,5 Millimetern gesetzt, so erzielt das Blindnietelement keine Lochleibung und kann ebenfalls in spröden Materialien eingesetzt werden.

In Abhängigkeit davon, welchen Abstand die Auswölbung oder Vorwulst zur Einstellkontur aufweist, kann der Klemmbereich bzw. die Trägermaterialstärke an das Blindnietelement angepasst werden. Je größer der Abstand ist, desto größer ist die entstehende Lochleibung bei großer Trägermaterialstärke bzw. desto kleiner bis hin zu null ist die entstehende Lochleibung bei kleinerer Trägermaterialstärke.

Mit anderen Worten: Je kleiner der Abstand des Endes der Einstellkontur zur Unterseite des Trägermaterials ist, desto geringer ist die Lochleibung; je größer der Abstand des Endes der Stufe der Einstellkontur zur Unterseite des Trägermaterials ist, desto größer ist die Lochleibung und somit die Klemmkraft des Blindnietelements.

Unabhängig hiervon oder in Verbindung hiermit kann die Einstellkontur dazu dienen, die Auswölbung oder Vorwulst zu zentrieren. Die Einstellkontur hat stets (auch nach dem Setzen des Blindnietelements) Spiel in der Bohrung.

Durch die Einstellkontur besteht eine Interaktion des Trägermaterials mit der Wulst, insbesondere dergestalt, dass mit dem Anfangspunkt der Endzustand des Blindnietelements definiert werden kann. Durch eine Aussparung beim zu montierenden Bauteil kann das Blindnietelement nach einer Demontage wieder axial verschoben werden.

Wenn die Einstellkontur nicht rund ist, sondern eine Vierkantform aufweist, kann das Blindnietelement vormontiert werden, indem die Auswölbung oder Wulst leicht angezogen wird. Danach kann das Blindnietelement ähnlich wie eine Käfigmutter an die richtige Position kurz vor der Montage geschoben werden. Danach kann die Schraube eingedreht werden, und das Blindnietelement bzw. die Wulst setzt sich mittels der entstehenden Vorspannkraft der Schraube.

Wenn die Einstellkontur nicht rund ist, sondern eine Sechskantform aufweist, weist das Blindnietelement eine deutlich höhere Verdrehsicherheit bei der Montage und vor allem für die Demontage auf.

Ein weiterer wichtiger Vorteil der vorliegenden Erfindung gegenüber dem Stand der Technik besteht in der kontrollierten Verformbarkeit, also vorzugsweise darin, dass die Wulst einen maximal wählbaren Außendurchmesser bildet, insbesondere größer wählbar als bei konventionellen Blindnietelementen aus dem Stand der Technik.

Auch kann die Höhe der Einstellkontur in Kombination mit der Lochleibung so mit der Wulst zusammenwirken, dass Lochleibung und Wulstdurchmesser gezielt steuerbar sind. Im Übrigen wird auch das Blindnietelement zentriert, muss aber nicht kreisförmig sein, sondern kann auch strahlensymmetrisch, zum Beispiel nach Art eines Vielecks, ausgebildet sein.

Weitere vorteilhafte Ausgestaltungen und zweckmäßige Weiterbildungen der vorliegenden Erfindung sind in den weiteren Ansprüchen gekennzeichnet.

Vorstehend wird ein bereits mit Wölbung versehenes Blindnietelement eingesetzt, wobei die geformte Wölbung eine Auswölbung ist.

Um die Stelle festzulegen, an der sich die Auswölbung ausbildet, kann in diesem Zylinderabschnitt die Außenseite des Schaftes erwärmt oder zum Glühen, insbesondere zum Weißglühen, gebracht werden, beispielsweise durch Induktion.

Durch dieses Erwärmen oder Erhitzen wird eine Destabilisierung hervorgerufen, so dass sich beim Stauchen die Auswölbung und danach aus dieser der Wulst bildet.

Die vorliegende Erfindung betrifft schließlich die Verwendung eines Blindnietelements gemäß der vorstehend dargelegten Art als Blindnietmutter.

### Kurze Beschreibung der Zeichnungen

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 9 nachgeordneten Ansprüche verwiesen, andererseits werden weitere Ausgestaltungen, Weiterbildungen, Merkmale und Vorteile der vorliegenden Erfindung nachstehend unter Bezugname auf die Zeichnung näher erläutert.

In dieser zeigt:

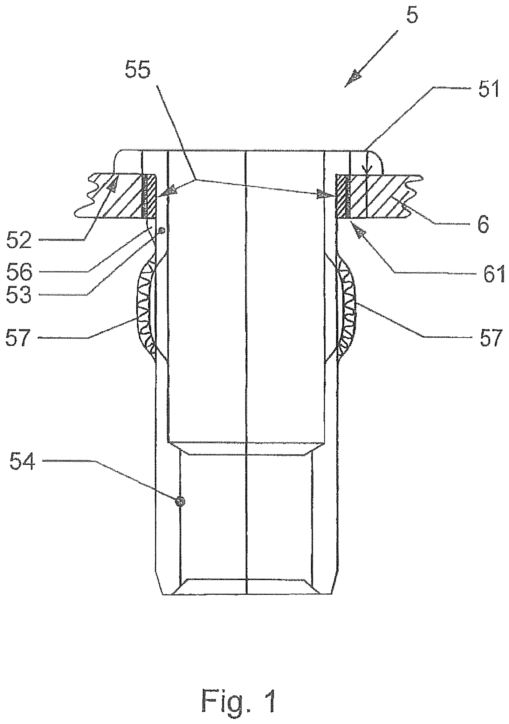

Fig. 1 in schematischer Querschnittsansicht ein Ausführungsbeispiel eines erfindungsgemäßen Blindnietelements, das nach dem Verfahren gemäß der vorliegenden Erfindung herstellt ist.

### Bester Weg zur Ausführung der vorliegenden Erfindung

Das insgesamt mit dem Bezugszeichen 5 bezeichnete Blindnietelement ist in einen Gegenstand 6 eingesetzt, der mit einer nur von einer Seite (= im Ausführungsbeispiel der Fig. 1 von der Oberseite) zugänglichen Bohrung 61 versehen ist.

Das Blindnietelement 5 weist einen Kopf 51 auf, der beim Ausführungsbeispiel gemäß Fig. 1 in Draufsicht kreisrund ausgebildet ist. Dieser Kopf 51 liegt mit einer Kreisringfläche 52 am Randbereich des einen Endes der Bohrung 61 an.

An den Kopf 51 schließt sich ein hohler Schaft 53 an, dessen Außenseite einen gegenüber dem Kopf 51 geringeren Außendurchmesser aufweist. Dieser Schaft 53 geht am vom Kopf 51 abgewandten Ende des Blindnietelements 5 in ein Innengewinde 54 über, das im Schaft 53 mit Abstand vom Kopf 51 vorgesehen ist.

Der Schaft 53 ist im Bereich des Kopfes 51 mit einer radial nach außen vorstehenden Einstellkontur 55 versehen, die vorzugsweise als Zentrierelement ausgebildet ist, die durch Pressen, vorzugsweise durch Kaltfließpressen, angeformt werden kann und als in Umfangsrichtung umlaufender Bund mit definiertem Außendurchmesser ausgebildet ist.

Diese Einstellkontur 55 grenzt an die als Kreisringfläche 52 ausgebildete Anlagefläche des Kopfes 51 an und ist ihrem vom Kopf 51 abgewandten Bereich von der Außenseite des Schaftes 53 mittels eines Absatzes oder mittels einer Stufe abgesetzt.

Die Einstellkontur 55 kann an ihrem vom Kopf abgewandten Bereich vorzugsweise von der Außenseite des Schafts mittels eines Absatzes abgesetzte Einstellkorrektur mehrere, vorzugsweise gleichmäßig am Umfang angeordnete, bis auf die Außenseite des Schaftes 53 reichende Rampen 56 aufweisen.

Zwischen der Einstellkontur 55 und dem Innengewinde 54 weist der Schaft 53 eine in radialer Richtung nach außen, jedoch nicht über die Einstellkontur 55 vorspringende Auswölbung 57 auf, die in Umfangsrichtung verläuft und rotationssymmetrisch ausgebildet ist.

Durch die vorgefertigte Auswölbung 57 ist der Schaft 53 in diesem Bereich gegenüber Stauchkräften destabilisiert, gewissermaßen vorgestaucht, und stellt einen kontrollierten und wohldefinierten Deformationsbereich beim Setzen des Blindnietelements 5 dar, an dem sich die Wulst bildet.

Zum Einsatz gelangt das Blindnietelement 5 insbesondere als Blindnietmutter.

### Liste der Bezugszeichen

- 5: Blindnietelement, insbesondere vorgestauchtes Blindnietelement, zum Beispiel vorgestauchte Blindnietmutter
- 51: Kopf
- 52: Kreisringfläche
- 53: hohler Schaft
- 54: Innengewinde
- 55: Einstellkontur, insbesondere Bund, zum Beispiel Justierelement oder Zentrierelement
- 56: Rampe
- 57: Wölbung, insbesondere Auswölbung oder Vorwulst
- 6: Gegenstand
- 61: Bohrung

## Patentansprüche

1. Blindnietelement (5) mit
- einem Kopf (51),
- einem sich daran anschließenden hohlen Schaft (53), dessen Außenseite einen gegenüber dem Kopf (51) geringeren Außendurchmesser aufweist, und
- einem im Schaft (53) mit axialem Abstand vom Kopf (51) vorgesehenen Innengewinde (54),
**dadurch gekennzeichnet,**
- **dass** der Schaft (53) im Bereich des Kopfes (51) mit einer radial nach außen vorstehenden Einstellkontur (55) versehen ist,
- **dass** der Schaft (53) eine in radialer Richtung bereits geformte Wölbung (57) aufweist, wobei die geformte Wölbung (57) eine Auswölbung ist, die in Umfangsrichtung rotationssymmetrisch- oder sternsymmetrisch ausgebildet ist,
- **dass** diese Wölbung (57) zwischen der Einstellkontur (55) und dem Innengewinde (54) angeordnet ist, und
- **dass** die Wölbung einen maximalen Aussendurchmesser aufweist, der nicht grösser als der Aussendurchmesser der Einstellkontur (55) ist.

2. Blindnietelement nach Anspruch 1, **dadurch gekennzeichnet, dass** die Einstellkontur ein Zentrierelement ist.

3. Blindnietelement nach einem der vorhergehenden Ansprüche **dadurch gekennzeichnet, dass** die geformte Wölbung eine nach Außen vorspringende Auswölbung oder Vorwulst ist.

4. Blindnietelement nach einem der vorhergehenden Ansprüche, **dadurch gekennzeichnet, dass** die Einstellkontur (55) als in Umfangsrichtung umlaufender Bund mit einem vorgebbaren, insbesondere maximalen, Außendurchmesser, insbesondere mit vorgebbarer Höhe, ausgebildet ist.

5. Blindnietelement nach einem der vorhergehenden Ansprüche, **dadurch gekennzeichnet, dass** die Einstellkontur (55) an die Anlagefläche des Kopfes (51) angrenzt.

6. Blindnietelement gemäß einem der Ansprüche 1 bis 5, **dadurch gekennzeichnet, dass** die Einstellkontur (55)
- kreisförmig, elliptisch, vierkantig oder sechskantig ausgebildet ist oder
- mit Zentrierzähnen versehen ist.

7. Blindnietelement gemäß einem der Ansprüche 1 bis 6, **dadurch gekennzeichnet, dass** die Einstellkontur (55) an ihrem vom Kopf (51) abgewandten Bereich von der Außenseite des Schaftes (53) mittels eines Absatzes oder mittels einer Stufe abgesetzt ist.

8. Blindnietelement gemäß einem der Ansprüche 1 bis 7, **dadurch gekennzeichnet, dass** die an ihrem vom Kopf (51) abgewandten Bereich vorzugsweise von der Aussenseite des Schafts mittels eines Absatzes abgesetzte Einstellkontur mindestens eine, insbesondere mehrere vorzugsweise gleichmäßig am Umfang in axialer Richtung angeordnete Rampen (56) auf der Außenseite des Schaftes (53) aufweist.

9. Verfahren zur Herstellung eines Blindnietelements (5) gemäß mindestens einem der Ansprüche 1 bis 8,
**dadurch gekennzeichnet,**
**dass** die Einstellkontur (55) im Bereich des Schaftes (53) angeformt wird.

10. Verfahren gemäß Anspruch 9, **dadurch gekennzeichnet, dass** die Einstellkontur (55) als in Umfangsrichtung umlaufender Bund mit dem vorgebbaren, insbesondere maximalen, Außendurchmesser und insbesondere mit der vorgebbaren Höhe angeformt wird.

11. Verfahren gemäß Anspruch 9 oder 10, **dadurch gekennzeichnet, dass** die Einstellkontur (55) durch Pressen, insbesondere durch Kaltfließpressen, angeformt wird.

12. Verfahren gemäß einem der Ansprüche 9 bis 11, **dadurch gekennzeichnet, dass** der Schaft (53) zwischen der Einstellkontur (55) und dem Innengewinde (54) in radialer Richtung, insbesondere nach außen, unter Ausbildung einer, insbesondere in Umfangsrichtung verlaufenden, Wölbung (57), insbesondere Auswölbung oder Vorwulst, bewegt, insbesondere mechanisch gedrückt, wird.

13. Verfahren gemäß einem der Ansprüche 9 bis 12, **dadurch gekennzeichnet, dass** der Schaft (53) im Bereich zwischen der Einstellkontur (55) und dem Innengewinde (54) zumindest partiell erwärmt und danach in axialer Richtung unter Ausbildung der Wölbung (57) gestaucht wird.

14. Verwendung eines Blindnietelements (5) gemäß einem der Ansprüche 1 bis 8 als Blindnietmutter.

## Claims

1. Blind rivet element (5) with
- a head (51),
- an adjoining hollow shank (53), the outside of which has a smaller outside diameter than the head (51), and
- an internal thread (54) provided in the shank (53) at an axial distance from the head (51), **characterized in**
- **that** the shaft (53) is provided with a radially outwardly projecting adjustment contour (55) in the region of the head (51),
- **that** the shank (53) has a bulge (57) which is already shaped in radial direction, wherein the shaped bulge (57) is a bulge which is rotationally symmetrical or star-shaped in circumferential direction,
- **that** this bulge (57) is arranged between the adjustment contour (55) and the internal thread (54), and
- **that** the bulge has a maximum outside diameter which is not greater than the outside diameter of the adjustment contour (55).

2. Blind rivet element according to claim 1, **characterized in that** the adjustment contour is a centering element.

3. Blind rivet element according to one of the preceding claims, **characterized in that** the formed bulge is an outwardly projecting bulge or protrusion.

4. Blind rivet element according to one of the preceding claims, **characterized in that** the adjustment contour (55) is formed as a circumferential collar with a predetermined, in particular maximum, external diameter, in particular with a predetermined height.

5. Blind rivet element according to one of the preceding claims, **characterized in that** the adjustment contour (55) adjoins the contact surface of the head (51).

6. Blind rivet element according to one of the claims 1 to 5, **characterized in that** the adjustment contour (55)
- is circular, elliptical, square or hexagonal in shape, or
- is provided with centering teeth.

7. Blind rivet element according to one of the claims 1 to 6, **characterized in that** the adjustment contour (55) is offset from the outside of the shank (53) at its region facing away from the head (51) by means of a shoulder or by means of a step.

8. Blind rivet element according to one of the claims 1 to 7, **characterized in that** the adjustment contour (55), which is offset at its region facing away from the head (51) from the outside of the shank by means of a step, has at least one, in particular a plurality of ramps (56), which are preferably arranged uniformly on the circumference in the axial direction, on the outside of the shank (53).

9. Method for manufacturing a blind rivet element (5) according to at least one of claims 1 to 8,
**characterized in that**
the adjustment contour (55) is formed in the region of the shank (53).

10. Method according to claim 9, **characterized in that** the adjustment contour (55) is formed as a circumferential collar with the predetermined, in particular maximum, outer diameter and in particular with the predetermined height.

11. Method according to claim 9 or 10, **characterized in that** the adjustment contour (55) is formed by pressing, in particular by cold extrusion.

12. Method according to one of the claims 9 to 11, **characterized in that** the shaft (53) is moved in radial direction, in particular outwardly, between the adjustment contour (55) and the internal thread (54), while forming a bulge (57), in particular a bulge or protrusion, extending in particular in circumferential direction.

13. Method according to one of the claims 9 to 12, **characterized in that** the shank (53) is at least partially heated in the region between the adjustment contour (55) and the internal thread (54) and is then upset in the axial direction, forming the bulge (57).

14. Use of a blind rivet element (5) according to one of the claims 1 to 8 as a blind rivet nut.

## Revendications

1. Élément de rivet aveugle (5) avec
- une tête (51),
- une tige creuse adjacente (53), dont l'extérieur a un diamètre extérieur inférieur à celui de la tête (51), et
- un filet intérieur (54) prévu dans la tige (53) à une distance axiale de la tête (51),
**caractérisé en ce**
- **que** la tige (53) est pourvue d'un contour de réglage (55) faisant saillie radialement vers l'extérieur dans la région de la tête (51),
- **que** la tige (53) présente un renflement (57) qui est déjà formé dans la direction radiale, le renflement formé (57) étant un renflement qui est symétrique en rotation ou en forme d'étoile dans la direction circonférentielle,
- **que** ce renflement (57) est disposé entre le contour de réglage (55) et le filet intérieur (54), et
- **que** le renflement a un diamètre extérieur maximal qui n'est pas supérieur au diamètre extérieur du contour de réglage (55).

2. Elément de rivet aveugle selon la revendication 1, **caractérisé en ce que** le contour de réglage est un élément de centrage.

3. Elément de rivet aveugle selon l'une des revendications précédentes, **caractérisé en ce que** le renflement formé est un renflement ou une saillie faisant saillie vers l'extérieur.

4. Elément de rivet aveugle selon l'une des revendications précédentes, **caractérisé en ce que** le contour de réglage (55) est formé comme un collier circonférentiel avec un diamètre extérieur prédéterminé, en particulier maximal, en particulier avec une hauteur prédéterminée.

5. Elément de rivet aveugle selon l'une des revendications précédentes, **caractérisé en ce que** le contour de réglage (55) est contigu à la surface de contact de la tête (51).

6. Elément de rivet aveugle selon l'une des revendications 1 à 5, **caractérisé en ce que** le contour de réglage (55)
- est de forme circulaire, elliptique, carrée ou hexagonale, ou
- est muni de dents de centrage.

7. Elément de rivet aveugle selon l'une des revendications 1 à 6, **caractérisé en ce que** le contour de réglage (55) est décalé de l'extérieur de la tige (53) dans sa zone opposée à la tête (51) au moyen d'un épaulement ou d'un gradin.

8. Elément de rivet aveugle selon l'une des revendications 1 à 7, **caractérisé en ce que** le contour de réglage (55), qui est décalé de la face extérieure de la tige sur sa zone opposée à la tête (51) au moyen d'un épaulement, présente sur la face extérieure de la tige (53) au moins une, en particulier plusieurs rampes (56), qui sont de préférence disposées uniformément sur la circonférence dans la direction axiale.

9. Procédé de fabrication d'un élément de rivet aveugle (5) selon au moins l'une des revendications 1 à 8,
**caractérisé en ce que**
le contour de réglage (55) est formé dans la région de la tige (53).

10. Procédé selon la revendication 9, **caractérisé en ce que** le contour de réglage (55) est formé comme un collier circonférentiel avec le diamètre extérieur prédéterminé, en particulier maximum, et en particulier avec la hauteur prédéterminée.

11. Procédé selon la revendication 9 ou 10, **caractérisé en ce que** le contour de réglage (55) est formé par pressage, en particulier par extrusion à froid.

12. Procédé selon l'une des revendications 9 à 11, **caractérisé en ce que** la tige (53) est déplacé dans la direction radiale, en particulier vers l'extérieur, entre le contour de réglage (55) et le filet intérieur (54), tout en formant un renflement (57), en particulier un renflement ou une saillie, s'étendant en particulier dans la direction circonférentielle.

13. Procédé selon l'une des revendications 9 à 12, **caractérisé en ce que** la tige (53) est chauffée au moins partiellement dans la zone entre le contour de réglage (55) et le filet intérieur (54) et est ensuite refoulée dans la direction axiale en formant le renflement (57).

14. Utilisation d'un élément de rivet aveugle (5) selon l'une des revendications 1 à 8 comme écrou de rivet aveugle.
